# EUROPEAN PATENT APPLICATION

(11) **EP 4 470 659 A1**
(43) Date of publication of application: **04.12.2024**
(21) Application number: 24176207.9
(22) Date of filing: 16.05.2024
(51) Int. Cl.: B01D 53/94, B01J 23/42, B01J 23/44, B01J 23/46, B01J 23/63, F01N 3/10

(54) **CATALYTIC WALL FLOW FILTER**

(30) Priority: 31.05.2023 US 202363505082 P
(71) Applicant: Johnson Matthey Public Limited Company, London EC4A 4AB (GB)
(72) Inventor: TURNER, John David, Royston, SG8 5HE (GB); WARREN, Sarah Louise, Royston, SG8 5HE (GB); CLOWES, Lucy, Royston, SG8 5HE (GB); WALTON, Mark James, Royston, SG8 5HE (GB)
(74) Representative: Boult Wade Tennant LLP

(57) **Abstract**

A catalytic wall-flow filter for exhaust gas from a gasoline engine is disclosed. The catalytic wall-flow filter comprises a wall-flow filter substrate, a first TWC coating in the first plurality of channels, and a second TWC coating in the second plurality of channels. The first TWC coating comprises palladium, rhodium, a first oxygen storage capacity (OSC) material, and a first inorganic support. The second TWC coating comprises platinum, rhodium, a second OSC material, and a second inorganic support.

## Description

### TECHNICAL FIELD

The present invention relates to a catalytic wall-flow filter suitable for use in a vehicular automobile emission treatment system, in particular an emission treatment system for a positive ignition internal combustion engine, such as a gasoline spark ignition engine. The catalytic wall-flow filter is effective in reducing HC, CO, NOx, and particulate matter emissions.

### BACKGROUND OF THE INVENTION

Gasoline particulate filters (GPF) are an emission after-treatment technology developed to control particulate emissions from gasoline direct injection (GDI) engines.

The population of GDI vehicles has been increasing, driven by CO₂ and/or fuel economy requirements. In 2016, an estimated 60% of new gasoline cars in Europe were GDI. The proportion of GDI vehicles has been also rapidly increasing in North America - within nine years after its first significant use in the market, GDI penetration has climbed to 48.5% of new light vehicle sales in the United States. Emissions from the growing GDI vehicle fleet are a public health concern and a potential major source of ambient particle pollution in highly populated urban areas.

Most early GPF applications included an uncoated GPF positioned downstream of a three-way catalyst (TWC). As the technology matured, GPFs have been also coated with a three-way catalyst. This catalyst-coated GPF configuration is sometimes referred to as the four-way catalyst. See, for example, US 10,625,243B2, US 2020/0353410A1, US 2019/0168162A1, US 2009/0193796A1. However, the combination of the TWC coating on a filter body does introduce additional issues such as undue back-pressure, and there are requirements for minimum CO, NOx and HC conversion properties. In addition, there are cost considerations with a need to provide the best possible balance of performance to cost.

Three-way catalysts are intended to catalyze three simultaneous reactions: (i) oxidation of carbon monoxide to carbon dioxide, (ii) oxidation of unburned hydrocarbons to carbon dioxide and water; and (iii) reduction of nitrogen oxides to nitrogen and oxygen. These three reactions occur most efficiently when the TWC receives exhaust gas from an engine running at or about the stoichiometric point. As is well known in the art, the quantity of carbon monoxide, unburned hydrocarbons and nitrogen oxides emitted when gasoline fuel is combusted in a positive ignition (e.g., spark-ignited) internal combustion engine is influenced predominantly by the air-to-fuel ratio in the combustion cylinder. An exhaust gas having a stoichiometrically balanced composition is one in which the concentrations of oxidising gases (NOₓ and O₂) and reducing gases (HC and CO) are substantially matched. The air-to-fuel ratio that produces this stoichiometrically balanced exhaust gas composition is typically given as 14.7:1.

The active components in a typical TWC comprise one or both of platinum and palladium in combination with rhodium supported on a high surface area oxide, and an oxygen storage capacity (OSC) material.

Theoretically, it should be possible to achieve complete conversion of O₂, NOₓ, CO and HC in a stoichiometrically balanced exhaust gas composition to CO₂, H₂O and N₂ (and residual O₂) and this is the duty of the TWC. Ideally, therefore, the engine should be operated in such a way that the air-to-fuel ratio of the combustion mixture produces the stoichiometrically balanced exhaust gas composition.

A way of defining the compositional balance between oxidising gases and reducing gases of the exhaust gas is the lambda (λ) value of the exhaust gas, which can be defined according to the following equation: lambda (λ) = (actual engine air-to-fuel ratio) / (stoichiometric air-to-fuel ratio) wherein a lambda value of 1 represents a stoichiometrically balanced (or stoichiometric) exhaust gas composition, wherein a lambda value of >1 represents an excess of O₂ and NOx and the composition is described as "lean" and wherein a lambda value of <1 represents an excess of HC and CO and the composition is described as "rich". It is also common in the art to refer to the air-to-fuel ratio at which the engine operates as "stoichiometric", "lean" or "rich", depending on the exhaust gas composition which the air-to-fuel ratio generates.

It should be appreciated that the reduction of NOₓ to N₂ using a TWC is less efficient when the exhaust gas composition is lean or stoichiometric. Equally, the TWC is less able to oxidize CO and HC when the exhaust gas composition is rich. The challenge, therefore, is to maintain the composition of the exhaust gas flowing into the TWC at as close to the stoichiometric composition as possible. Of course, when the engine is in steady state it is relatively easy to ensure that the air- to-fuel ratio is stoichiometric. However, when the engine is used to propel a vehicle, the quantity of fuel required changes transiently depending upon the load demand placed on the engine by the driver. This makes controlling the air-to-fuel ratio so that a stoichiometric exhaust gas is generated for three-way conversion particularly difficult. In practice, the air- to-fuel ratio is controlled by an engine control unit, which receives information about the exhaust gas composition from an exhaust gas oxygen (EGO) (or lambda) sensor: a so-called closed loop feedback system. A feature of such a system is that the air-to-fuel ratio oscillates (or perturbates) between slightly rich of the stoichiometric (or control set) point and slightly lean, because there is a time lag associated with adjusting air-to-fuel ratio. This perturbation is characterised by the amplitude of the air-to-fuel ratio and the response frequency (Hz).

When the exhaust gas composition is slightly rich of the set point, there is a need for a small amount of oxygen to consume the unreacted CO and HC, i.e., to make the reaction more stoichiometric. Conversely, when the exhaust gas goes slightly lean, the excess oxygen needs to be consumed. This was achieved by the development of OSC material that liberates or absorbs oxygen during the perturbations. The commonly used OSC material in modern TWCs is cerium oxide or a mixed oxide containing cerium, e.g., a CeZr mixed oxide.

There is a need to develop technologies to cost effectively convert CO, NOx and HC and to reduce particulate matters in exhaust gas from a gasoline engine.

### SUMMARY OF THE INVENTION

One aspect of the present disclosure is directed to a catalytic wall-flow filter for exhaust gas from a gasoline engine, the catalytic wall-flow filter comprising:
a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face;
a first TWC coating in the first plurality of channels, the first TWC coating comprising palladium, rhodium, a first oxygen storage capacity (OSC) material, and a first inorganic support;
a second TWC coating in the second plurality of channels, the second TWC coating comprising platinum, rhodium, a second OSC material, and a second inorganic support;
wherein the first TWC coating is coated from the first face;
wherein the second TWC coating is coated from the second face;
wherein the first face is an inlet face and the second face is an outlet face of the catalytic wall-flow filter.

Another aspect of the present disclosure is directed to a method for the manufacture of a catalytic wall-flow filter for the treatment of an exhaust gas, the method comprising:
(i) forming a first washcoat slurry comprising palladium, rhodium, a first oxygen storage capacity (OSC) material, and a first inorganic support;
(ii) coating a wall-flow filter substrate with the first washcoat slurry, the wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face, wherein the first washcoat slurry is coated from the first face;
(iii) forming a second washcoat slurry comprising platinum, rhodium, a second oxygen storage capacity (OSC) material, and a second inorganic support;
(iv) coating a wall-flow filter substrate with the second washcoat slurry from the second face of the wall-flow filter substrate to form a washcoated wall-flow filter substrate;
(v) calcining the washcoated wall-flow filter substrate to form the catalytic wall-flow filter.

Another aspect of the present disclosure is an emission treatment system for treating a flow of a combustion exhaust gas from gasoline direct injection engines, the system comprising the catalytic wall-flow filter as disclosed herein. Preferably the exhaust system comprises a TWC catalyst and the catalytic wall-flow filter, wherein the TWC catalyst is upstream of the catalytic wall-flow filter.

According to a further aspect, the invention provides a method of treating a combustion exhaust gas from a positive ignition internal combustion engine containing oxides of nitrogen, carbon monoxide, hydrocarbons, and particulate matter, which method comprising contacting the exhaust gas with the catalytic wall-flow filter as disclosed herein.

### BRIEF DESCRIPTION OF THE DRAWINGS

Figure 1 shows the CO conversions of GPF-1 to GPF-5.
Figure 2 shows the total hydrocarbon conversions of GPF-1 to GPF-5.
Figure 3 shows the NOx conversions of GPF-1 to GPF-5.

### DETAILED DESCRIPTION OF THE INVENTION

The present disclosure will now be described further. In the following passages, different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

One aspect of the present disclosure is directed to a catalytic wall-flow filter for exhaust gas from a gasoline engine, the catalytic wall-flow filter comprising:
a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face;
a first TWC coating in the first plurality of channels, the first TWC coating comprising palladium, rhodium, a first oxygen storage capacity (OSC) material, and a first inorganic support;
a second TWC coating in the second plurality of channels, the second TWC coating comprising platinum, rhodium, a second OSC material, and a second inorganic support;
wherein the first TWC coating is coated from the first face;
wherein the second TWC coating is coated from the second face;
wherein the first face is an inlet face and the second face is an outlet face of the catalytic wall-flow filter.

The wall-flow filter substrate can be a ceramic, e.g., silicon carbide, cordierite, aluminium nitride, silicon nitride, aluminium titanate, alumina, mullite, pollucite, or composites comprising segments of any two or more thereof. Cordierite, a magnesium aluminosilicate, and silicon carbide are particularly preferred.

The wall-flow filter substrate suitable for use in the present invention typically has a mean pore size of from 8 to 45 µm, for example 8 to 25 µm, or 10 to 20 µm. Pore size is well known in the art and appropriate measurement techniques are known to a person skilled in the art. The wall-flow filter substrate may have a porosity of 40 to 75%, such as 45 to 70%. The mean pore size may be determined using mercury porosimetry and x-ray tomography according to conventional methods.

The catalytic wall-flow filter comprises a first TWC coating in the first plurality of channels. The first TWC coating preferably comprises palladium and rhodium in a weight ratio of from 10:1 to 1:10, more preferably in a weight ratio of from 5:1 to 1:5, most preferably in a weight ratio of from 2:1 to 1:2. The first TWC coating may further comprises platinum. In some embodiments, the first TWC coating loading comprises a barium component.

The catalytic wall-flow filter comprises a second TWC coating in the second plurality of channels. The second TWC coating preferably comprises platinum and rhodium in a weight ratio of from 10:1 to 1:10, more preferably in a weight ratio of from 5:1 to 1:5, most preferably in a weight ratio of from 2:1 to 1:2. The second TWC coating may further comprises palladium.

"Oxygen storage capacity" refers to the ability of materials used as oxygen storage capacity material in a catalyst composition to store oxygen at lean conditions and to release it at rich conditions.

The first OSC material and the second OSC material can be the same or different. The first OSC material and the second OSC material can each be a ceria or a mixed oxide comprising ceria. Preferably the first OSC material and the second OSC material each comprises a mixed oxide of cerium, zirconium; a mixed oxide of cerium, zirconium, and aluminium; a mixed oxide of cerium, zirconium, and neodymium; or a mixed oxide of cerium, zirconium and praseodymium. The term "mixed oxide" as used herein generally refers to a mixture of oxides in a single phase, as is conventionally known in the art.

The amount of the OSC material in the first TWC coating or the second TWC coating can each be from 5 to 90 wt%, preferably from 10 to 80 wt%, relative to the total weight of the coating.

In some embodiments, each of the first OSC material and the second OSC material independently comprises an OSC derived from a CeZr mixed oxide sol having a D90 of less than 1.3 micron. The CeZr mixed oxide sol comprise a CeZr mixed oxide (CeZr mixed oxide particles or CeZr mixed oxide nanoparticles) dispersed in an aqueous medium.

Particle size distributions can be characterized by the D10, D50 and D90 measurements. In each case the number indicates the percentage amount of particles smaller than the recited value. In other words, a D90 of 100 microns means that 90% of the particles are smaller than 100 microns in diameter. By knowing a D10 and a D90, the range of particles in a distribution of particles can be defined. The characterization of the particle size of a sample by its D10 and D90 values generally defines the breadth of the particle-size distribution. The closer these values are, the narrower the distribution of particle sizes.

The particle size measurements necessary to obtain D10, D50 and D90 values of the CeZr mixed oxide sol and/or the particulate inorganic oxide can be obtained by Laser Diffraction Particle Size Analysis using a Malvern Mastersizer 3000, which is a volume-based technique (*i.e.* D50 and D90 may also be referred to as D_{V}50 and D_{V}90 (or D(v,0.50) and D(v,0.90)) and applies a mathematical Mie theory model to determine a particle size distribution. The laser diffraction system works by determining diameters for the particles based on a spherical approximation. For the particle size measurements by Laser Diffraction Particle Size Analysis, diluted samples were prepared by sonication in distilled water without surfactant for 30 seconds at 35 watts.

In some embodiments, the D90 of the CeZr mixed oxide sol may be less than 1.2 micron, or less than 1.1 micron, or less than 1.0 micron, or less than 900 nm, or less than 800 nm, or less than 700 nm, or less than 600 nm, or less than 500 nm, or less than 400 nm, or less than 300 nm.

In some other embodiments, the D90 of the CeZr mixed oxide sol may be between 1.2 micron and 1.3 micron, or between 1.1 micron and 1.2 micron, or between 1.0 micron and 1.1 micron, or between 900 nm and 1.0 micron, or between 800 nm and 900 nm, or between 700 nm and 800 nm, or between 600 nm and 700 nm, or between 500 nm and 600 nm, or between 400 nm and 500 nm, or between 300 nm and 400 nm, or between 200 nm and 300 nm, or between 100 nm and 200 nm.

The CeZr mixed oxide sol may have a D50 of between 100 nm and 700 nm, preferably between 200 nm and 600 nm, more preferably between 300 nm and 400 nm.

The particle size can also be characterized by obtaining a Z-average particle size of a sample. The Z average is the intensity weighted mean hydrodynamic size of the ensemble collection of particles measured by dynamic light scattering (DLS). The Z-average is derived from a cumulants analysis of the measured correlation curve, wherein a single particle size is assumed and a single exponential fit is applied to the autocorrelation function. The particle size measurements necessary to obtain Z-average particle size of the CeZr mixed oxide sol can be obtained by Dynamic Light Scattering Particle Size Analysis using a Malvern Zetasizer Nano. All tests are performed in a dilute aqueous medium where the harmonic mean hydrodynamic diameter of a sphere of equivalent diffusivity is determined by cumulants analysis of the time dependency of light scattered by randomly moving particles, in accordance with the Stokes-Einstein Equation.

The Z-average particle size of the CeZr mixed oxide sol is preferably between 150 nm and 350 nm, more preferably between 230 and 310 nm.

The first inorganic oxide support and the second inorganic oxide support can each be an oxide of Groups 2, 3, 4, 5, 13 and 14 elements. The inorganic oxide support is preferably a refractory oxide that exhibits chemical and physical stability at high temperatures, such as the temperatures associated with gasoline engine exhaust. The first inorganic oxide support and the second inorganic oxide support can each be selected from the group consisting of alumina, silica, titania, and mixed oxides or composite oxides thereof. More preferably, the inorganic oxide support is an alumina.

The inorganic oxide support such as alumina can be doped with a dopant. The dopant can be selected from the group consisting of La, Sr, Si, Ba, Y, Pr, Nd, Ce, and mixtures thereof. Preferably, the dopant is La, Ba, or Ce. Most preferably, the dopant is La. The dopant content in the inorganic oxide support can be from 1 to 30 wt%, preferably from 2 to 25 wt%, more preferably from 3 to 20 wt%.

The D50 of the first or the second inorganic material can be in the range of 0.1 to 100 µm, preferably in the range of 0.1 to 50 µm.

In some embodiments, the first inorganic oxide support is an alumina doped with La in an amount of from 2 to 25 wt%, more preferably from 3 to 20 wt%.

In some embodiments, the second inorganic oxide support is an alumina doped with La in an amount of from 2 to 25 wt%, more preferably from 3 to 20 wt%.

The OSC material and the inorganic oxide support in the first TWC coating or in the second TWC coating can have a weight ratio of from 10:1 to 1:10, preferably from 5:1 to 1:5, more preferably from 3:1 to 1:3.

The first TWC coating preferably covers from 30% to 80%, more preferably from 50 to 55% of the length of the first plurality of channels.

The second TWC coating preferably covers from 30% to 80%, more preferably from 50 to 55% of the length of the second plurality of channels.

The first TWC coating and the second TWC coating may each be an in-wall coating, an on-wall coating, or a combination of in-wall and on-wall coating.

The first TWC coating loading can be in the range of 0.3 to 1.5 g/in³, preferably 0.5 to 1.0 g/in³. The first TWC coating loading is defined as the weight of the first TWC coating relative to the total volume of the catalytic wall-flow filter after calcination.

The second TWC coating loading can be in the range of 0.3 to 1.5 g/in³, preferably 0.5 to 1.0 g/in³.

The first TWC coating may have a PGM loading in the range of 2 to 10 g/ft³, preferably in the range of 3 to 9 g/ft³, more preferably in the range of 4 to 8 g/ft³.

PGM refers to platinum group metals, which include platinum, palladium, rhodium, ruthenium, iridium, and osmium.

The second TWC coating may have a PGM loading in the range of 2 to 10 g/ft³, preferably in the range of 3 to 9 g/ft³, more preferably in the range of 4 to 8 g/ft³.

Preferably, the weight ratio of palladium to platinum in the catalytic wall-flow filter is in the range of from 10:1 to 1:10, more preferably from 5:1 to 1:5, even more preferably from 2:1 to 1:2. In one embodiment, the weight ratio of palladium to platinum in the catalytic wall-flow filter is about 1:1.

The PGM loading of the first TWC coating is defined as the weight of the total PGM in the first TWC coating relative to the total volume of the catalytic wall-flow filter after calcination. Similarly, the PGM loading of the second TWC coating is defined as the weight of the total PGM in the second TWC coating relative to the total volume of the catalytic wall-flow filter after calcination.

Another aspect of the present disclosure is directed to a method for the manufacture of a catalytic wall-flow filter for the treatment of an exhaust gas, the method comprising:
(i) forming a first washcoat slurry comprising palladium, rhodium, a first oxygen storage capacity (OSC) material, and a first inorganic support;
(ii) coating a wall-flow filter substrate with the first washcoat slurry, the wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face, wherein the first washcoat slurry is coated from the first face;
(iii) forming a second washcoat slurry comprising platinum, rhodium, a second oxygen storage capacity (OSC) material, and a second inorganic support;
(iv) coating a wall-flow filter substrate with the second washcoat slurry from the second face of the wall-flow filter substrate to form a washcoated wall-flow filter substrate;
(v) calcining the washcoated wall-flow filter substrate to form the catalytic wall-flow filter.

The first washcoat slurry and the second washcoat slurry generally comprise a solvent. Water and organic solvents (methanol, ethanol, propanol, and the like) or their mixtures can be used. Preferably, water is used as the solvent.

Typically the first washcoat slurry and/or the second washcoat slurry have a solid content of from 20 to 30 wt%.

The first washcoat slurry may further comprises a barium component.

The method comprises: coating the wall-flow filter substrate with the first washcoat slurry from the first face, and coating a wall-flow filter substrate with the second washcoat slurry from the second face of the wall-flow filter substrate to form a washcoated wall-flow filter substrate. One suitable coating procedure is described in US6599570B1. The second washcoat slurry may be applied before the first washcoat slurry, or vice versa.

After one or both the first washcoat slurry and the second washcoat slurry is applied to the wall-flow filter substrate, it may be preferable to dry the wall-flow filter substrate containing one coating at a temperature (such as 100 to 200°C) before another coating is applied.

Calcining is routine in the art and may be performed under usual conditions, e.g., at about 500 °C.

Another aspect of the present disclosure is an emission treatment system for treating a flow of a combustion exhaust gas from gasoline direct injection engines, the system comprising the catalytic wall-flow filter as disclosed herein. The exhaust system can comprise additional components, such as a TWC catalyst containing a TWC composition applied to a honeycomb flow-through substrate and disposed either upstream or downstream of the catalytic wall-flow filter according to the invention.

Preferably the exhaust system comprises a TWC catalyst and the catalytic wall-flow filter as disclosed herein, wherein the TWC catalyst is upstream of the catalytic wall-flow filter.

The catalytic wall-flow filter is effective in reducing hydrocarbons, CO, NOx, and particulate emissions.

According to a further aspect, the invention provides a method of treating a combustion exhaust gas from a positive ignition internal combustion engine containing oxides of nitrogen, carbon monoxide, hydrocarbons, and particulate matter, which method comprising contacting the exhaust gas with the catalytic wall-flow filter as disclosed herein.

### COMPARATIVE EXAMPLE 1: GPF-1

A washcoat slurry ("Slurry-A") was prepared by mixing rhodium nitrate, palladium nitrate, a CeZr mixed oxide sol having a weight ratio of ZrO₂ to CeO₂ of about 2:1 and a D90 of <1 µm, and a La-stabilized alumina component having a D90 of 5 µm, barium hydroxide, and water. The solid content was about 24%.

A cordierite wall-flow filter substrates (4.66 x 4.5 inch, 300/8, average mean pore size 15 microns, porosity 65%) was coated with Slurry-A from the inlet face and the outlet face using the coating process described in US6599570B2. The inlet washcoat length and outlet washcoat length are both about 50-55% of the substrate length. The coated filter substrate was dried at 115°C after each coating was applied. The coated filter substrate was calcined at 500°C for 1 h. After calcination, the coated filter (GPF-1) had a washcoat loading of 1.6 g/in³ and a total PGM loading of 8 g/ft³ with a Pd:Rh weight ratio of 1:1.

### COMPARATIVE EXAMPLE 2: GPF-2

A washcoat slurry ("Slurry-B") was prepared by mixing rhodium nitrate, palladium nitrate, platinum nitrate, a CeZr mixed oxide sol having a weight ratio of ZrO₂ to CeO₂ of about 2:1 and a D90 of <1 µm, and a La-stabilized alumina component having a D90 of 5 µm, barium hydroxide, and water. The solid content was about 24%.

A cordierite wall-flow filter substrates (4.66 x 4.5 inch, 300/8, average mean pore size 15 microns, porosity 65%) was coated with Slurry-B from the inlet face and the outlet face using the coating process described in US6599570B2. The inlet washcoat length and outlet washcoat length are both about 50-55% of the substrate length. The coated filter substrate was dried at 115°C after each coating was applied. The coated filter substrate was calcined at 500°C for 1 h. After calcination, the coated filter (GPF-2) had a washcoat loading of 1.6 g/in³ and a total PGM loading of 8 g/ft³ with a Pt:Pd:Rh weight ratio of 1:1:2.

### COMPARATIVE EXAMPLE 3: GPF-3

A washcoat slurry ("Slurry-C") was prepared by mixing rhodium nitrate, platinum nitrate, a CeZr mixed oxide sol having a weight ratio of ZrO₂ to CeO₂ of about 2:1 and a D90 of <1 µm, and a La-stabilized alumina component having a D90 of 5 µm. The solid content was about 24%.

A cordierite wall-flow filter substrates (4.66 x 4.5 inch, 300/8, average mean pore size 15 microns, porosity 65%) was coated with Slurry-C from the inlet face and the outlet face using the coating process described in US6599570B2. The inlet washcoat length and outlet washcoat length are both about 50-55% of the substrate length. The coated filter substrate was dried at 115°C after each coating was applied. The coated filter substrate was calcined at 500°C for 1 h. After calcination, the coated filter (GPF-3) had a washcoat loading of 1.6 g/in³ and a total PGM loading of 8 g/ft³ with a Pt:Rh weight ratio of 1:1.

### EXAMPLE 1: GPF-4

A cordierite wall-flow filter substrates (4.66 x 4.5 inch, 300/8, average mean pore size 15 microns, porosity 65%) was coated with Slurry-A from the inlet face using coating process described in US6599570B2. The inlet washcoat length was about 50-55% of the substrate length. After it was dried at 115°C, it was then coated with Slurry-C from the outlet face. The outlet washcoat length was about 50-55% of the substrate length. The coated filter substrate was then dried at 115°C, and calcined at 500°C for 1 h. After calcination, the coated filter (GPF-4) had a washcoat loading of 1.6 g/in³ and a total PGM loading of 8 g/ft³ with a Pt:Pd:Rh weight ratio of 1:1:2.

### COMPARATIVE EXAMPLE 4: GPF-5

A cordierite wall-flow filter substrates (4.66 x 4.5 inch, 300/8, average mean pore size 15 microns, porosity 65%) was coated with Slurry-C from the inlet face using coating process described in US6599570B2. The inlet washcoat length was about 50-55% of the substrate length. After it was dried at 115°C, it was then coated with Slurry-A from the outlet face. The outlet washcoat length was about 50-55% of the substrate length. The coated filter substrate was then dried at 115°C, and calcined at 500°C for 1 h. After calcination, the coated filter (GPF-5) had a washcoat loading of 1.6 g/in³ and a total PGM loading of 8 g/ft³ with a Pt:Pd:Rh weight ratio of 1:1:2.

### PERFORMANCE TEST

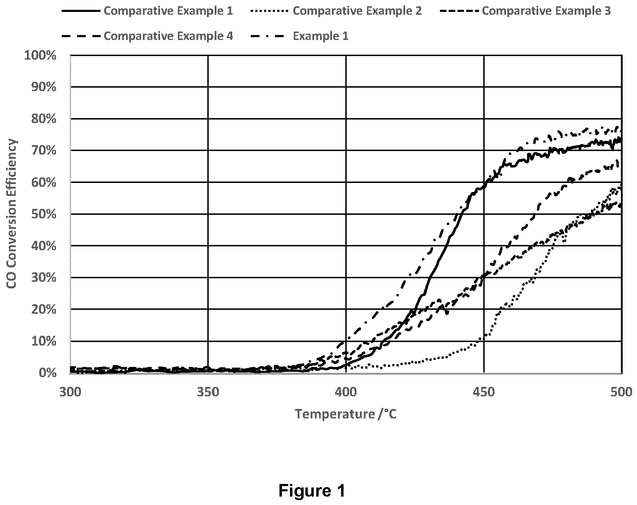

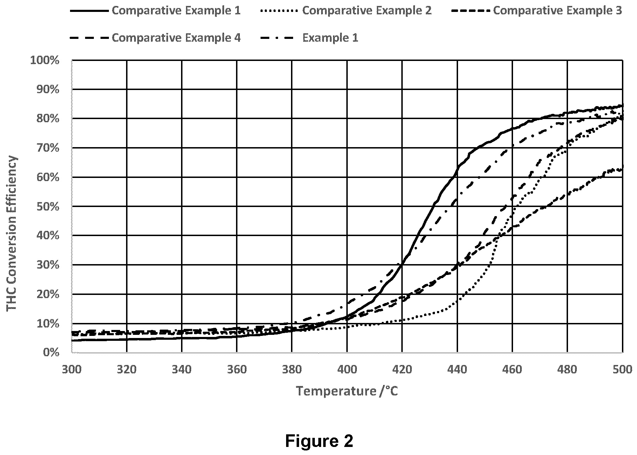

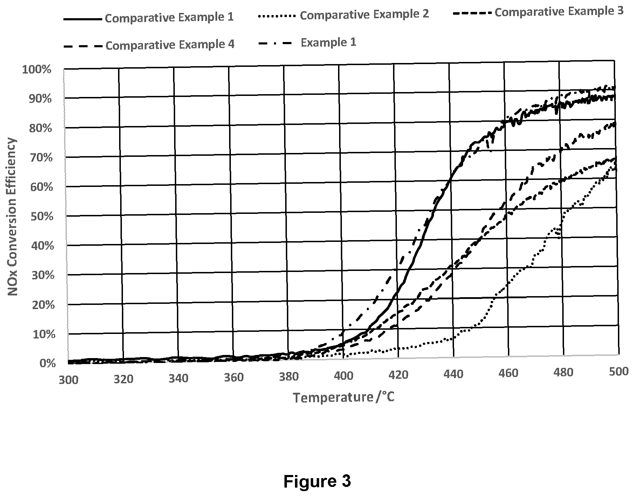

The GPF-1 to GPF-5 prepared above were hydrothermally aged at 1050°C HTA, 2% O2, balance N2, 10% H2O. They were then tested on engine bench for light off against CO, THC and NOx emissions. Test results are shown in Table 1, Table 2, and Figures 1-3. From the T50 results, GPF-4 (from Example 1) showed equivalent light off to GPF-1 (from Comparative Example 1) for CO, THC and NOx. GPF-4 contains a combination of Pt, Pd and Rh as compared to GPF-1 (Comparative Example 1) which contains Pd and Rh. The total PGM loading in GPF-4 and GPF-1 are the same. GPF-4 gives a cost benefit as compared to GPF-1 as Pt is cheaper than Pd at time of testing. GPF-4 also shows a benefit over GPF-2 (from Comparative Example 2) for light off performance.

**TABLE 1**

| | Filter Substrate | Comp. Example 1 | Comp. Example 2 | Comp. Example 3 | Comp. Example 4 | Example 1 |
|---|---|---|---|---|---|---|
| Cold Flow backpressure at 600m3/h (mbar) | 50.6 | 60.5 | 60.7 | 57.7 | 58.5 | 59.1 |

**TABLE 2**

| | Comparative Example 1 | Comparative Example 2 | Comparative Example 3 | Comparative Example 4 | Example 1 |
|---|---|---|---|---|---|
| Filter | GPF-1 | GPF-2 | GPF-3 | GPF-5 | GPF-4 |
| CO T50 | 441.5 | 488.1 | 490.7 | 468.1 | 440 |
| HC T50 | 431.1 | 461.6 | 472.3 | 457.3 | 437.7 |
| NOx T50 | 433.4 | 482.3 | 462.7 | 457.3 | 432.3 |

## Claims

1. A catalytic wall-flow filter for exhaust gas from a gasoline engine, the catalytic wall-flow filter comprising:
a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face;
a first TWC coating in the first plurality of channels, the first TWC coating comprising palladium, rhodium, a first oxygen storage capacity (OSC) material, and a first inorganic support;
a second TWC coating in the second plurality of channels, the second TWC coating comprising platinum, rhodium, a second OSC material, and a second inorganic support;
wherein the first TWC coating is coated from the first face;
wherein the second TWC coating is coated from the second face;
wherein the first face is an inlet face and the second face is an outlet face of the catalytic wall-flow filter.

2. The catalytic wall-flow filter of claim 1, wherein the first TWC coating comprises palladium and rhodium in a weight ratio of from 5:1 to 1:5.

3. The catalytic wall-flow filter of claim 1, wherein the first TWC coating comprises palladium and rhodium in a weight ratio of from 2:1 to 1:2.

4. The catalytic wall-flow filter of claim 1, wherein the second TWC coating comprises platinum and rhodium in a weight ratio of from 5:1 to 1:5.

5. The catalytic wall-flow filter of claim 1, wherein the second TWC coating comprises platinum and rhodium in a weight ratio of from 2:1 to 1:2.

6. The catalytic wall-flow filter of claim 1, wherein the first TWC coating has a total PGM loading in the range of from 3 to 6 g/ft³, and wherein the second TWC coating has a total PGM loading in the range of from 3 to 6 g/ft³.

7. The catalytic wall-flow filter of claim 1, wherein the first TWC coating loading is in the range of from 0.5 to 1.0 g/in³, and wherein the second TWC coating loading is in the range of from 0.5 to 1.0 g/in³.

8. The catalytic wall-flow filter of claim 1, wherein each of the first OSC material and the second OSC material independently comprises an OSC derived from a CeZr mixed oxide sol having a D90 of less than 1.3 micron.

9. The catalytic wall-flow filter of claim 1, where the catalytic wall-flow filter has a weight ratio of palladium to platinum from 2:1 to 1:2.

10. The catalytic wall-flow filter of claim 1, wherein the first TWC coating covers from 50 to 55% of the length of the first plurality of channels, and wherein the second TWC coating covers from 50 to 55% of the length of the second plurality of channels.

11. A method for the manufacture of a catalytic wall-flow filter for the treatment of an exhaust gas, the method comprising:
(i) forming a first washcoat slurry comprising palladium, rhodium, a first oxygen storage capacity (OSC) material, and a first inorganic support;
(ii) coating a wall-flow filter substrate with the first washcoat slurry, the wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face, wherein the first washcoat slurry is coated from the first face;
(iii) forming a second washcoat slurry comprising platinum, rhodium, a second oxygen storage capacity (OSC) material, and a second inorganic support;
(iv) coating a wall-flow filter substrate with the second washcoat slurry from the second face of the wall-flow filter substrate to form a washcoated wall-flow filter substrate;
(v) calcining the washcoated wall-flow filter substrate to form the catalytic wall-flow filter.

12. An emission treatment system for treating a flow of a combustion exhaust gas from gasoline direct injection engines, the system comprising the catalytic wall-flow filter of claim 1.

13. The emission treatment system of claim 12, further comprising a TWC catalyst containing a TWC composition applied to a honeycomb flow-through substrate.

14. The emission treatment system of claim 13, wherein the TWC catalyst is disposed upstream of the catalytic wall-flow filter.

15. A method of treating a combustion exhaust gas from a positive ignition internal combustion engine containing oxides of nitrogen, carbon monoxide, hydrocarbons, and particulate matter, which method comprising contacting the exhaust gas with the catalytic wall-flow filter of claim 1.
